Europäisches Patentamt

(19) European Patent Office

Office européen des brevets

(11) Veröffentlichungsnummer: **0 059 300**
**B1**

(12) **EUROPÄISCHE PATENTSCHRIFT**

(45) Veröffentlichungstag der Patentschrift:
06.11.85

(51) Int. Cl.⁴: **A 01 G 13/06**, F 23 N 5/02

(21) Anmeldenummer: **82100079.1**

(22) Anmeldetag: **08.01.82**

(54) **Freilandheizung.**

(30) Priorität: **03.03.81 DE 3108037**

(43) Veröffentlichungstag der Anmeldung:
**08.09.82 Patentblatt 82/36**

(45) Bekanntmachung des Hinweises auf die Patenterteilung:
**06.11.85 Patentblatt 85/45**

(84) Benannte Vertragsstaaten:
**AT CH DE FR LI**

(56) Entgegenhaltungen:
**DE - A - 2 453 539**
**DE - A - 3 000 043**
**FR - A - 1 476 784**
**FR - A - 1 590 708**
**US - A - 3 494 552**
**US - A - 3 750 642**

(73) Patentinhaber: **Berger, Cornelia, Wannenweg 14,
D-6973 Boxberg (DE)**

(72) Erfinder: **Berger, Cornelia, Wannenweg 14,
D-6973 Boxberg (DE)**

## Beschreibung

Die Erfindung betrifft eine Freilandheizung, aufweisend eine Mehrzahl von Flüssiggasbrennern, von denen jeder mit einem Pilotbrenner und einem zu- und abschaltbaren Hauptbrenner ausgestattet ist, mit den weiteren im ersten Teil des Anspruchs 1 angegebenen Merkmalen. Aus der Offenlegungsschrift DE-A-3 000 043 ist ein derartiger Brenner bekannt. Bei diesem Brenner wird die Betriebsbereitschaft dadurch hergestellt, dass in das Rohrleitungsnetz der Freilandheizung zunächst nur ein Brennstoffdruck von ca. 1 bar eingegeben wird. Bei diesem Druck gelangt der Brennstoff über eine thermoelektrische Zündsicherung und einen Niederdruckregler zum Pilotbrenner und wird dort zur Herstellung der Betriebsbereitschaft gezündet. Im Rohrleitungsnetz dieser Freilandheizung sind ein oder mehrere, über Thermostat gesteuerte, Magnetventile angeordnet. Bei Erreichen einer am Thermostat eingestellten Gefährdungstemperatur schliesst sich ein Stromkreis und das Magnetventil öffnet sich; damit gelangt der volle – am Gastank eingestellte – Brennstoffdruck von 3 bis 3,5 bar auf das Rohrleitungsnetz. Erst wenn am Brenner ein Druck von mindestens 3 bar vorhanden ist, öffnet sich das vor der Rohrschlange und dem Hauptbrenner befindliche Rückschlagventil. Der noch flüssige Brennstoff verdampft in der erwärmten Rohrschlange und tritt gasförmig an der Düse des Hauptbrenners aus und wird durch die brennende Pilotflamme gezündet. Derartige, über den Brennstoffdruck gesteuerte Flüssiggasbrenner haben sich in der Praxis nicht bewährt. Bei der Verteilung von flüssigem Brennstoff über verschiedene Höhenlagen im Weinberg sind auch die Druckunterschiede an den einzelnen Brennstellen erheblich. Um eine einwandfreie Arbeitsweise zu erreichen, müsste jeder Brenner mit einem Thermostat und einem Magnetventil ausgestattet werden. Für die Versorgung der Magnetventile mit Steuerstrom wären pro Hektar etwa eintausend Meter im Weinberg verlegte Stromkabel erforderlich.

Die in der Offenlegungsschrift DE-A-3 000 043 beschriebenen, über den Brennstoffdruck gesteuerten Freilandbrenner sind aus technischen und wirtschaftlichen Gründen nicht brauchbar.

Aus der Praxis ist bekannt, dass die Temperaturen in den zu schützenden Gebieten sehr unterschiedlich sein können. Ortsfremde Kaltluft kann beispielsweise aus nördlichen Richtungen eindringen. Grundsätzlich kann aus allen höheren Lagen Kaltluft zufliessen. In vielen Fällen würde eine Abriegelung der Kaltluft-Zuflussstellen ausreichend Schutz bieten.

Auch die Entstehung von sogenannten Kaltluftseen kann schon mit wenigen Brennstellen durch die entstehende Thermik verhindert werden. Wenn schon mit wenigen Brennstellen ein Vollschutz erreicht werden kann, wäre es unwirtschaftlich, Brenner zu betreiben, in deren Bereich noch keine Frostgefährdung gegeben ist. Hier will die Erfindung Abhilfe schaffen.

Aufgabe der Erfindung ist es, einen Flüssiggasbrenner so auszubilden, dass bei Frostgefahr zur Herstellung der Betriebsbereitschaft die Pilotflamme gezündet wird und der Hauptbrenner – ohne Zuführung von Steuerstrom – nur dann zugeschaltet wird, wenn die in Bodennähe erfühlte Umgebungstemperatur die am Thermostatventil eingestellte Gefährdungstemperatur erreicht oder unterschreitet.

Diese Aufgabe wird erfindungsgemäss dadurch gelöst, dass in dem Hauptrohr zwischen der Abzweigung der Zuleitung für den Pilotbrenner und der Verdampferrohrschlange ein einstellbares, von einem Feinfühler gesteuertes Thermostatventil angeordnet ist.

Vorteilhaft ist ein in Bodennähe angeordneter Kapillarfühler, der über Kapillarrohr das Thermostatventil temperaturabhängig betätigt. Bei Kälte zieht sich die im Fühler befindliche Flüssigkeit zusammen und durch die Volumen- und Druckänderung öffnet sich das Thermostatventil und der Hauptbrenner wird zugeschaltet. Bei Erwärmung dehnt sich die Flüssigkeit im Fühler aus und schliesst das Thermostatventil.

Der besondere Vorteil der Erfindung besteht darin, dass in einer Freilandheizung nur noch dann und dort Brennstoff verbraucht wird, wo dies zur Abwendung von Frostschäden unerlässlich ist. Vorteilhaft ist auch, dass am Thermostatventil die Gefährdungstemperatur – die je nach Fruchtstand und Entwicklungsstand der Knospen zwischen +0,5 bis −5 °C liegen kann – eingestellt wird, wodurch erheblich Brennstoff eingespart werden kann.

Im Folgenden wird die Erfindung anhand eines Ausführungsbeispiels näher erläutert. Es zeigt:

Fig. 1 eine gasbeheizte Freilandheizung mit 25 bis 30 Infrarotstrahlern pro Hektar in einem hügeligen Gelände,

Fig. 2 einen Schnitt A–B durch einen Infrarotstrahler,

Fig. 3 einen temperaturabhängig gesteuerten Flüssiggasbrenner.

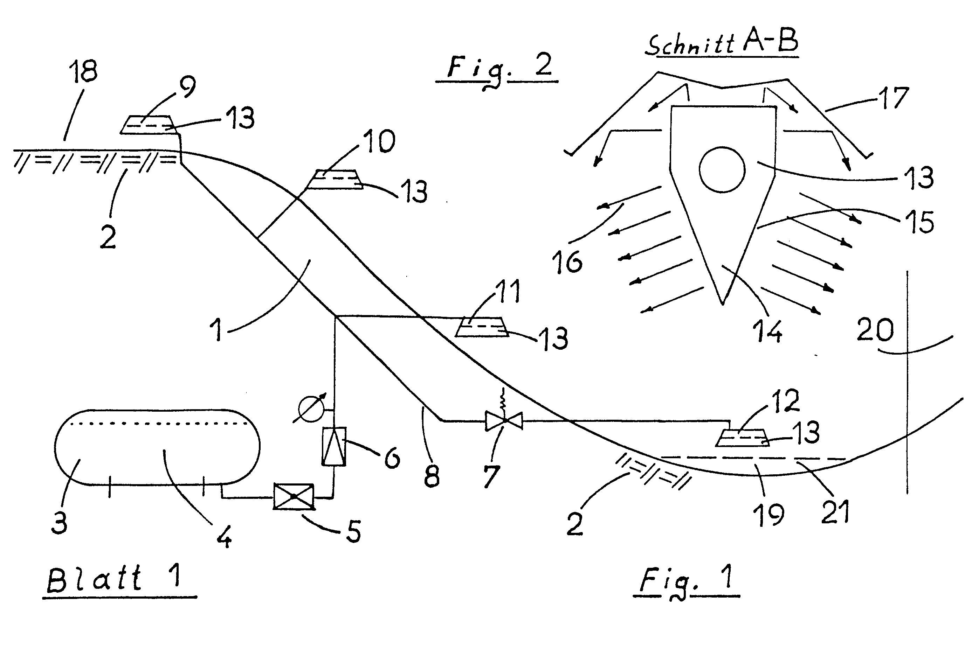

Fig. 1 zeigt eine mit Flüssiggas betriebene Freilandheizung 1 in einem hügeligen Gelände 2. Das Flüssiggas wird der Flüssigphase 4 aus dem Tank 3 entnommen. Bei geöffnetem Hauptventil 5 gelangt der Brennstoff zu dem Druckregler 6 und wird hier auf einen Druck von ca. 3,5 bar geregelt. Über das mit einem Sicherheitsventil 7 ausgestattete Leitungsnetz 8 wird der Brennstoff den in den Infrarotstrahlern 9–12 eingebauten Flüssiggasbrennern 13 zugeführt. Um einen ausreichenden Frostschutz zu erreichen, sind pro Hektar 25 bis 30 Infrarotstrahler mit einer Leistung von je 100 Kwh erforderlich. Die Infrarotstrahler, im Folgenden kurz Strahler genannt, bestehen aus einer 3 m langen Brennkammer 14, deren Querschnitt nach Schnitt A–B einem auf der Spitze stehenden Dreieck ähnelt. (Fig. 2).

Die durch den Flüssiggasbrenner 13 auf ca. 800 °C erhitzte Brennkammer 14 sendet von den Strahlflächen 15 Infrarotstrahlen 16 in das Gelände 2 und erwärmt dieses. Die von der Brennkammer 14 nach oben gerichteten Infrarotstrahlen 16 werden durch den Reflektor 17 ebenfalls in das Gelände 2 gelenkt. Diese Geländeerwärmung in Verbindung mit der entstehenden Thermik bewirkt einen intensiven Luftaustausch.

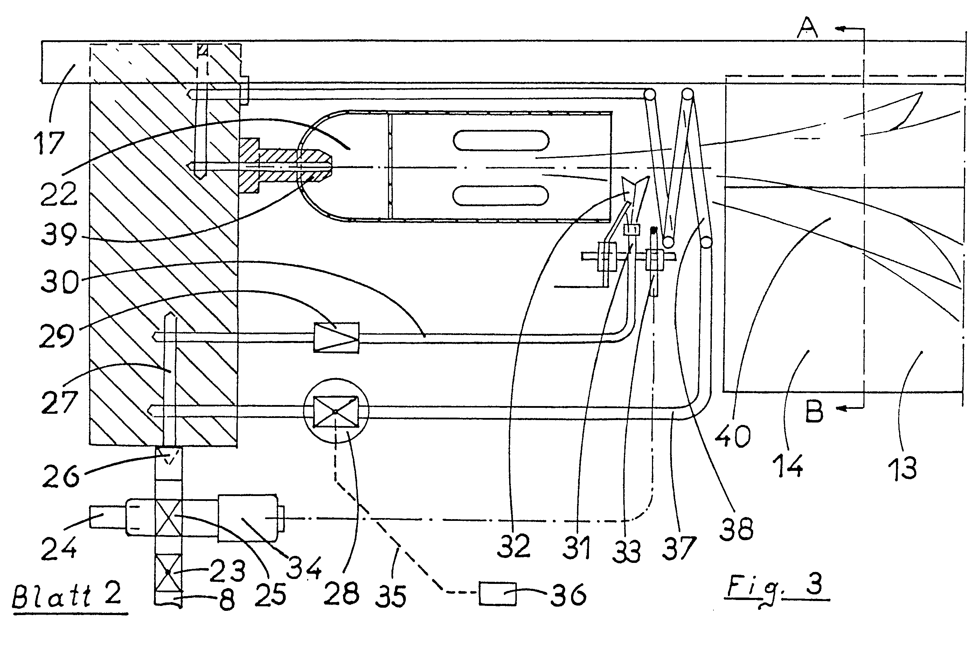

Aus der Praxis ist bekannt, dass die Temperaturen in dem Gelände 2 sehr unterschiedlich sein können und sich auch häufig verändern. Wenn es z.B. auf Höhe 18 zu Kaltluftbildungen kommt, wäre es zunächst nur nötig, dass die dort stehenden Strahler arbeiten.Fliesst dagegen vom Nachbargrundstück 20 Kaltluft ein, wäre es ausreichend, wenn die Strahler im Tal 19 arbeiten, womit die Bildung eines Kaltluftsees verhindert wird. Die im Gelände 2 unterschiedlichen Höhenlagen sowie die unterschiedlichen Temperaturen und Luftbewegungen verlangen einen sehr anpassungsfähigen Flüssiggasbrenner 13, der in Fig. 3 dargestellt ist. Bei Frostgefahr wird das Hauptventil 5 geöffnet und der Brennstoff gelangt über das Leitungsnetz 8 unter einem Druck von ca. 3,5 bar über den geöffneten Kugelhahnen 23 zur thermoelektrischen Zündsicherung 25. Mit Drükken des Druckknopfes 24 wird das Ventil der Zündsicherung 25 geöffnet und der Brennstoff gelangt über das Schmutzsieb 26 und Kanal 27 zum Niederdruckregler 29 und wird hier auf 50 mbar reduziert. Über die Zuleitung 30 gelangt der Brennstoff zum Pilotbrenner 31 und wird hier gezündet. Durch die Eigenwärme des Pilotbrenners 31 tritt der Brennstoff an der Düse des Pilotbrenners 31 gasförmig aus. Die brennende Pilotflamme 32 erwärmt das Thermoelement 33 und dadurch fliesst ein Strom zum Magneteinsatz 34, der das Ventil der Zündsicherung 25 solange in geöffneter Stellung hält, wie die Pilotflamme 32 brennt. Kernstück des Flüssiggasbrenners 13 ist das im Hauptrohr 37 vor der Verdampferrohrschlange 38 eingebaute Thermostatventil 28, welches eine Skala aufweist, die von +5 °C bis −5 °C reicht. Hier wird die sogenannte Gefährdungstemperatur, bei der der Hauptbrenner zugeschaltet werden soll, eingestellt. Mit dem Fernfühler 36 wird die Umgebungstemperatur in Erdbodennähe erfühlt. Bei Kälte zieht sich die im Flüssigkeitsfühler 36 befindliche Flüssigkeit zusammen und die Volumen- und Druckänderung wird über Kapillarrohr 35 zum Thermostatventil 28 übertragen. Wird nun in Bodennähe eine am Thermostat eingestellte Gefährdungstemperatur von z.B. −2 °C erreicht, so öffnet sich das Thermostatventil 28 und der Brennstoff gelangt über Hauptrohr 37 in die Verdampferrohrschlange 38 – verdampft dort sofort – und tritt gasförmig aus der Düse 39 des Hauptbrenners 22 aus. Das ausströmende Gas wird durch die brennende Pilotflamme 32 gezündet und die Hauptflamme 40 beheizt die Brennkammer 14. Bei ansteigender Umgebungstemperatur dehnt sich die im Kapillarfühler befindliche Flüssigkeit aus und durch die Erhöhung von Volumen und Druck wird über das Kapillarrohr 35 des Thermostatventils 28 geschlossen. Die Hauptflamme 40 geht aus und die Pilotflamme 32 brennt weiter. Dieser Vorgang kann sich in einer Frostnacht beliebig oft wiederholen. Die Hauptflamme 40 verbraucht immer nur dann Brennstoff, wenn in der Umgebung eine Frostgefährdung gegeben ist.

## Patentansprüche

1. Freilandheizung, aufweisend eine Mehrzahl von Flüssiggasbrennern, von denen jeder ausgestattet ist mit einem zu- und abschaltbaren Hauptbrenner (22) zur Beheizung einer Brennkammer (14), welcher Hauptbrenner (22) über eine Zündsicherung (25) und einem dieser nachgeordneten Hauptrohr (37) an ein Versorgungsnetz (8) für Flüssiggas angeschlossen ist, wobei ein Bereich des Hauptrohres (37) als Verdampferrohrschlange (38) ausgebildet ist, und mit einem Pilotbrenner (31) zur Aufrechterhaltung der Betriebsbereitschaft, dessen Zuleitung (30) zwischen Zündsicherung (25) und der Verdampferrohrschlange (38) vom Hauptrohr (37) abzweigt, dadurch gekennzeichnet, dass in dem Hauptrohr (37) zwischen der Abzweigung der Zuleitung für den Pilotbrenner (31) und der Verdampferrohrschlange (38) ein einstellbares, von einem Fernfühler (36) gesteuertes Thermostatventil (28) angeordnet ist.

2. Freilandheizung nach Anspruch 1, dadurch gekennzeichnet, dass bei jedem Flüssiggasbrenner in die Zuleitung (30) zum Pilotbrenner (31) ein Niederdruckregler (29) angeordnet ist.

3. Freilandheizung nach Anspruch 1 und 2, dadurch gekennzeichnet, dass bei jedem der Flüssiggasbrenner der Fernfühler (36) als Kapillarfühler mit Kapillarrohr (35) ausgebildet ist.

4. Freilandheizung nach Anspruch 1 und 2, dadurch gekennzeichnet, dass die Hauptbrenner (22) ohne Steuerstrom geschaltet werden.

## Revendications

1. Chauffage de plein champ, composé d'une multitude de brûleurs à gaz liquéfié dont chacun est équipé d'un brûleur principal (22) qui peut être ouvert ou fermé et qui sert à chauffer une chambre de combustion (14); ce brûleur principal (22) est raccordé un réseau d'alimentation (8) de gaz liquéfié, par l'intermédiaire d'une veilleuse de sécurité (25) et d'un tuyau principal (37) placé en aval de celle-ci et dont une partie fait fonction de serpentin évaporatoire (38); en plus, le tout est équipé d'un brûleur pilote (31) destiné à le maintenir en ordre de marche et dont la conduite d'amenée (30) part du tuyau principal (37) entre la veilleuse de sécurité (25) et le serpentin évaporatoire (38), cette dérivation étant marquée par une soupape thermostatique réglable (28) commandée par un télédétecteur (36) et qui est disposée dans le tuyau principal (37) entre la dérivation de la conduite d'amenée du brûleur pilote (31) et le serpentin évaporatoire (38).

2. Chauffage de plein champ, conformément au no. 1, qui se distingue par le fait que dans chacun des brûleurs à gaz liquéfié un régulateur basse pression (29) est disposé dans la conduite d'amenée (30) du brûleur pilote (31).

3. Chauffage de plein champ, conformément aux nos. 1 et 2, qui se distingue par le fait que dans chaque brûleur à gaz liquéfié le télédétecteur (36) a la forme d'un détecteur capillaire avec tube capillaire (35).

4. Chauffage de plein champ, conformément aux nos. 1 et 2, qui se distingue par le fait que les brûleurs principaux (22) sont ouverts et fermés sans courant de commande.

## Claims

1. Open-land heating, featuring a greater number of liquid gas burners, of which each is equipped with a main burner (22) that can be switched on an off for heating a combustion chamber (14), said main burner (22) being connected to the supply network (8) for liquid gas via a safety ignition device (25) and a main pipe (37) appointed after the latter, whereby one area of the main pipe (37) is designed as an evaporator pipe coil (38), and which a pilot burner (31) for maintaining operational readiness, whose feed line (30) branches off from the main pipe (37) between the safety ignitino device (25) and the evaporator pipe coil (38), is characterized by an adjustable thermostat valve (28) controlled by a remote sensor (36) being appointed in the main pipe (37) between the branch of the feed line for the pilot burner (31) and the evaporator pipe coil (38).

2. Open-land heating in accordance with Claim 1 is characterized by a low-pressure controller (29) being appointed in the feed line (30) to the pilot burner (31) for each liquid gas burner.

3. Open-land heating in accordance with Claims 1 and 2 is characterized by the remote sensor (36) being designed as a capillary sensor with capillary pipe (35) for each liquid gas burner.

4. Open-land heating in accordance with Claims 1 and 2 is characterized by the main burners (22) being switched without control current.

_Fig. 2_

_Schnitt A-B_

_Blatt 1_

_Fig. 1_

0 059 300

Fig. 3

Blatt 2

0 059 300

2/2